# EUROPEAN PATENT APPLICATION

(11) **EP 4 807 558 A1**
(43) Date of publication of application: **16.09.2026**
(21) Application number: 24888344.9
(22) Date of filing: 27.08.2024
(51) Int. Cl.: G06F 11/07

(54) **INFORMATION PROCESSING DEVICE, PROTECTION CONTROL DEVICE, AND WATCHDOG TIMER OPERATION METHOD**

(30) Priority: 09.11.2023 JP 2023191853
(71) Applicant: Hitachi, Ltd., Tokyo 100-8280 (JP)
(72) Inventor: ONOE Shinsuke, Tokyo 100-8280 (JP); KIDO Mitsuyasu, Tokyo 100-8280 (JP); YOSHIDA Shoji, Tokyo 100-8280 (JP); MATSUNOBU Yutaka, Tokyo 100-8280 (JP); SATOU Mitsuo, Tokyo 100-8280 (JP)
(74) Representative: MERH-IP Matias Erny Reichl Hoffmann Patentanwälte PartG mbB
(86) International application number: PCT/JP2024/030479
(87) International publication number: WO 2025/100042

(57) **Abstract**

An information processing device comprises an arithmetic processing unit including one or more CPUs each of which includes one or more cores; a watchdog timer clear signal generation unit that outputs a first timer clear signal based on the number of clear signals whose values changes normal among clear signals periodically from the arithmetic processing unit; and a first watchdog timer detection unit that transmits a first watchdog detection signal based on an abnormal state of the first clear signal and is provided in hardware in an IC common to the arithmetic processing unit, and an output source of the clear signals includes CPUs in a case where the arithmetic processing unit includes the CPUs, cores in the CPU in a case where at least one of the one or more CPUs includes the cores, and at least one of tasks processed in the arithmetic processing unit.

## Description

### Incorporation by Reference

The present application claims priority from Japanese patent application JP 2023-191853 filed on November 9, 2023, the content of which is hereby incorporated by reference into this application.

### Technical Field

The present invention relates to an information processing device, a protection control device, and a watchdog timer operation method.

### Background Art

In information processing devices and protection control devices, performance of an arithmetic processing unit including a central processing unit (CPU) has improved, and configurations are known in which not only an operation clock is improved, but also processing is distributed by employing a plurality of CPUs in the device. In addition, watchdog timer (WDT) detection is known as a method for detecting an abnormal state such as runaway of the CPU.

In addition, a digital protection control system in which a function of a conventional protection control system is divided into a merging unit (MU) and a protection control device, and the MU and the protection control device are connected via a transmission network has started to be applied. As an international standard in this configuration, International Electrotechnical Commission (IEC) 61850 is known.

In the digital protection control system according to IEC 61850, the MU acquires the electrical quantity (current and voltage) in the power system (current and voltage are hereinafter referred to as electrical quantity). The MU performs analog to dital (A/D) conversion on the acquired electrical quantity signal, and transmits a digital signal after the A/D conversion to the protection control device via process bus transmission.

Background arts of the present technical field include JP 2011-2993 A (Patent Literature 1) and JP 2021-149436 A (Patent Literature 2).

Patent Literature 1 describes that "The WDT monitoring device has a reset flag for resetting the WDT for each CPU. When the reset flag is not on, it indicates that an abnormality has occurred in the CPU." (see paragraph [0016]).

Patent Literature 1 also describes that "The standby flag indicates that the CPU is in the standby mode in the case of ON (1), and the reset flag indicates that the CPU is normally operating in the case of ON (1)." (see paragraph [0022]).

Patent Literature 1 also describes that "The WDT reset signal generation unit generates a reset signal in a case where all the CPUs are normal and supplies the reset signal to the WDT, and does not generate the reset signal in a case where any one or more of the CPUs are not normal." (see paragraph [0023]).

Patent Literature 1 also describes that "Therefore, the OR circuit and the AND circuit represent the WDT reset signal generation unit by a logic circuit. The AND circuit outputting "1" corresponds to the WDT reset signal generation unit outputting the reset signal." (see paragraph [0040]).

Patent Literature 2 discloses that "The controller of the image forming device includes a main CPU and a sub CPU. The controller further includes a first WDT circuit and a second WDT circuit that detect an abnormal operation of the sub CPU. The image forming device extends the second WDT reset time to a predetermined time according to the first interrupt signal output from the first WDT circuit on the basis of the timeout of the first WDT reset time, and executes controller rebooting processing. In addition, the image forming device executes system reset processing according to the second interrupt signal output from the second WDT circuit on the basis of the timeout of the extended second WDT reset time." (see Abstract).

### Prior Art Literature

### Patent Literature

Patent Literature 1: JP 2011-2993 A
Patent Literature 2: JP 2021-149436 A

### Summary of Invention

### Technical Problem

The technology described in Patent Literature 1 aggregates reset flags from a plurality of CPUs by an AND circuit or an OR circuit and uses the reset flags for WDT detection. However, there needs to be a timing at which all the reset flags from the CPUs become 1, and there is a problem that timing adjustment needs to be performed between the CPUs.

Furthermore, in the protection control device, real-time operation and device reliability are required. Therefore, when a multi-core CPU mounted on a system on chip is used for a protection control device, particularly when virtualization is applied to execute a bare metal application for each core, it is desirable to execute WDT detection for each core. On the other hand, the technology described in Patent Literature 1 has a problem that it does not have a WDT detection configuration suitable for the protection control system as described above.

Therefore, an aspect of the present invention satisfactorily detects an abnormal state of an arithmetic processing unit.

### Solution to Problem

An aspect of the present invention adopts the following structures in order to solve the above problem. An information processing device that detects an abnormality of an arithmetic processing unit, the information processing device comprises: the arithmetic processing unit; a watchdog timer clear signal generation unit that receives a plurality of clear signals periodically output from the arithmetic processing unit, monitors whether changes in values of the plurality of clear signals are normal or abnormal, and outputs a first timer clear signal when a number of clear signals whose values are normal reaches a predetermined number; and a first watchdog timer detection unit that transmits a first watchdog detection signal when the first timer clear signal is input and an abnormal state of the first timer clear signal continues for a first predetermined time, the arithmetic processing unit includes one or more CPUs, each of the one or more CPUs includes one or more cores, an output source of the plurality of clear signals input to the watchdog timer clear signal generation unit includes a plurality of CPUs in a case where the arithmetic processing unit includes the plurality of CPUs, a plurality of cores in the CPU in a case where at least one of the one or more CPUs includes the plurality of cores, and at least one of a plurality of tasks processed in the arithmetic processing unit, and the watchdog timer clear signal generation unit is provided in hardware in an IC common to the arithmetic processing unit.

An aspect of the present invention adopts the following structures. A protection control device that detects an abnormality of an arithmetic processing unit, the protection control device comprises the arithmetic processing unit, the arithmetic processing unit includes one or more CPUs, each of the one or more CPUs includes one or more cores, the protection control device: divides software processing for implementing a protection control function into a plurality of pieces; distributedly executes the plurality of divided software processing by allocating the plurality of divided software processing to any one of a plurality of CPUs in a case where the arithmetic processing unit includes the plurality of CPUs, a plurality of cores in the CPU in a case where at least one of the one or more CPUs includes the plurality of cores, and a plurality of tasks to be processed in the arithmetic processing unit; and comprises a watchdog timer clear signal generation unit that and receives a plurality of clear signals periodically output from the plurality of software processing, monitors whether changes in values of the plurality of clear signals are normal or abnormal, and outputs a first timer clear signal when a number of the clear signals whose values change normally reaches a predetermined number, and a first watchdog timer detection unit that outputs a first watchdog detection signal when the first timer clear signal is input and an abnormal state of the first timer clear signal continues for a first predetermined time, and the watchdog timer clear signal generation unit is provided in hardware in an IC common to the arithmetic processing unit.

An aspect of the present invention adopts the following structures. In a watchdog timer operation method that detects an abnormality of an arithmetic processing unit included in an information processing device, the information processing device comprises: the arithmetic processing unit; a watchdog timer clear signal generation unit that receives a plurality of clear signals periodically output from the arithmetic processing unit, monitors whether changes in values of the plurality of clear signals are normal or abnormal, and outputs a first timer clear signal when a number of clear signals whose values are normal reaches a predetermined number; a first watchdog timer detection unit that transmits a first watchdog detection signal when the first timer clear signal is input and an abnormal state of the first timer clear signal continues for a first predetermined time; a second watchdog timer detection unit to which one or a plurality of clear signals periodically output from the arithmetic processing unit are input, and outputs a second watchdog detection signal when an abnormal state of the one or a plurality of clear signals input continues for a second predetermined time that is shorter than the first predetermined time; and a restart information recording unit that records information related to a restart of the information processing device according to the second watchdog detection signal, the arithmetic processing unit includes one or more CPUs, each of the one or more CPUs includes one or more cores, an output source of the plurality of clear signals input to the watchdog timer clear signal generation unit includes a plurality of CPUs in a case where the arithmetic processing unit includes the plurality of CPUs, a plurality of cores in the CPU in a case where at least one of the one or more CPUs includes the plurality of cores, and at least one of a plurality of tasks processed in the arithmetic processing unit, the watchdog timer clear signal generation unit is provided in hardware in an IC common to the arithmetic processing unit, and the watchdog timer operation method comprises: obtaining information related to the restart recorded in the restart information recording unit; determining whether the obtained information related to the restart satisfies a predetermined condition; and invalidating a restart of the information processing device based on output of the second watchdog detection signal when the information related to the restart recorded in the restart information recording unit satisfies the predetermined condition.

### Advantageous Effects of Invention

The aspect of the present invention can satisfactorily detect an abnormal state of an arithmetic processing unit.

Problems, configurations, and effects which are not mentioned above are explained in the following embodiments.

### Brief Descriptions of Drawings

FIG. 1 is a block diagram illustrating an example of a configuration related to watchdog timer detection in a protection control device according to the first embodiment.
FIG. 2 is a block diagram illustrating a configuration example of the protection control device according to the first embodiment.
FIG. 3 is an explanatory diagram illustrating an example of a station bus and a process bus according to the first embodiment.
FIG. 4 is an explanatory diagram illustrating a configuration example of a WDT clear signal generation unit according to the first embodiment.
FIG. 5 is an example of a timing chart of internal signals in the WDT clear signal generation unit and a first WDT detection unit according to the first embodiment.
FIG. 6 is an example of a timing chart of internal signals of the WDT clear signal generation unit and the first WDT detection unit according to the first embodiment.
FIG. 7 is a flowchart illustrating an example of constant monitoring processing according to the first embodiment.
FIG. 8 a block diagram illustrating an example of a configuration related to watchdog timer detection in the protection control device is according to the second embodiment.
FIG. 9 is a flowchart illustrating an example of device activation processing according to the second embodiment.
FIG. 10 is an explanatory diagram illustrating a usage example of a second WDT detection unit.

### Description of Embodiments

In the following, embodiments of the present invention are explained referring the attached drawings. In the embodiments, the same configuration has the same reference letter. The embodiments are examples to achieve the present invention and do not limit a technical range of the present invention.

### [First Embodiment]

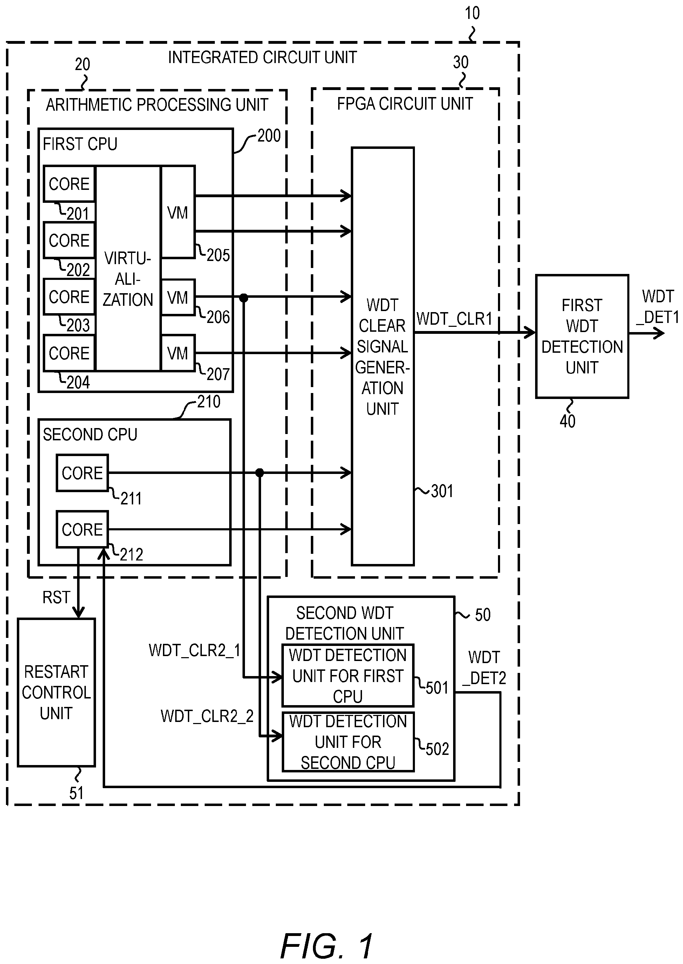

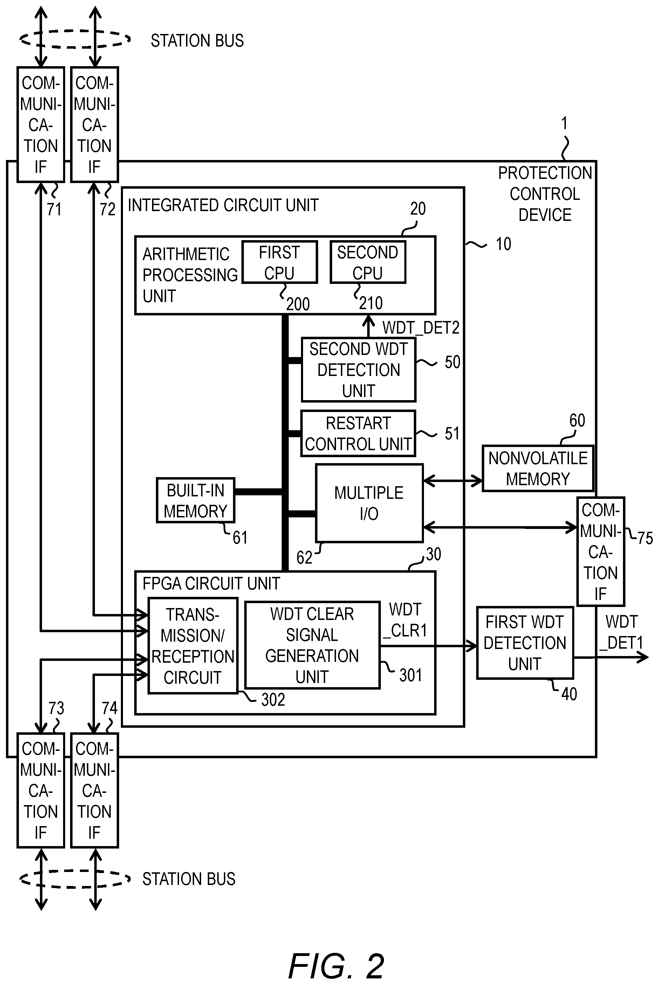

FIG. 2 is a block diagram illustrating a configuration example of a protection control device 1, and FIG. 1 is a block diagram illustrating an example of a configuration related to watchdog timer detection in the protection control device 1. In the embodiments, a watchdog timer is abbreviated as WDT (watchdog timer), a virtual machine is abbreviated as VM (virtual machine), and a communication interface is abbreviated as communication IF. In addition, a system on chip is abbreviated as SoC (system on chip).

The protection control device 1 includes, for example, an integrated circuit unit 10, a first WDT detection unit 40, a nonvolatile memory 60, communication IFs 71 to 74, and a communication IF 75. The integrated circuit unit 10 is a SoC of a single integrated circuit (IC), and includes, for example, an arithmetic processing unit 20, a field programmable gate array (FPGA) circuit unit 30, a second WDT detection unit 50, a restart control unit 51, a built-in memory 61, and a multiple input/output (I/O) 62.

The arithmetic processing unit 20, the FPGA circuit unit 30, the second WDT detection unit 50, the restart control unit 51, the built-in memory 61, and the multiple I/O 62 included in the integrated circuit unit 10 are connected to each other by an internal bus, and the internal bus is indicated by a thick line in FIG. 2.

The arithmetic processing unit 20 includes a plurality of central processing units (CPUs), and includes a first CPU 200 and a second CPU 210 in the examples of FIGS. 1 and 2.

The FPGA circuit unit 30 includes a WDT clear signal generation unit 301 and a transmission/reception circuit 302. The WDT clear signal generation unit 301 receives a plurality of clear signals periodically transmitted from the arithmetic processing unit 20 as input, and transmits a timer clear signal WDT_CLR to the outside of the integrated circuit unit 10. Details of the WDT clear signal generation unit 301 will be described later.

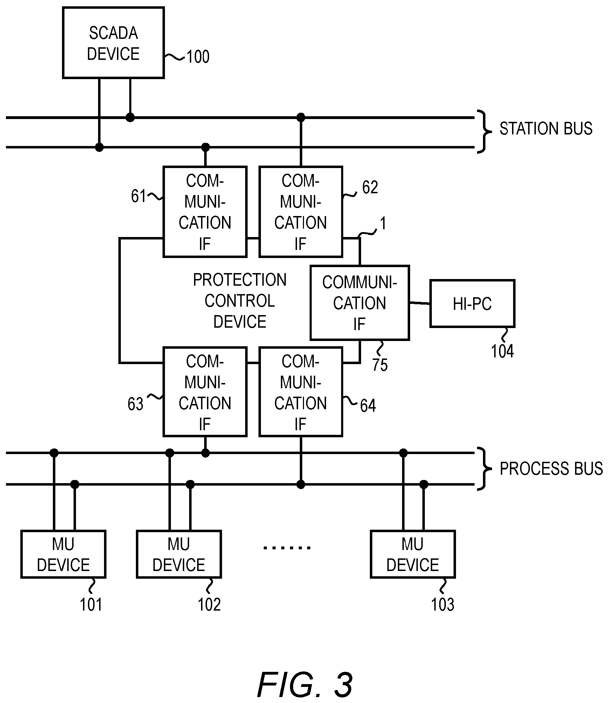

The transmission/reception circuit 302 performs data transmission/reception processing via the communication IFs 71 to 74. The communication IF 71 and the communication IF 72 are connected to a transmission path called a station bus, and the communication IF 73 and the communication IF 74 are connected to a transmission path called a process bus. Details of the station bus and the process bus will be described later with reference to FIG. 3.

The first WDT detection unit 40 receives a first timer clear signal WDT_CLR1 transmitted from the integrated circuit unit 10 as input, and transmits a first watchdog detection signal WDT_DET1 to the outside of the protection control device 1 when it is determined that the first timer clear signal WDT_CLR1 is interrupted for a predetermined time.

The WDT_DET1 signal is a signal indicating an external alarm, and is input to another device (not illustrated). The host system is notified of an abnormal state of the protection control device 1 by the WDT_DET1 signal, and the output of the protection control device 1 is locked.

The integrated circuit unit 10 has a built-in WDT detection unit (referred to as second WDT detection unit 50 in the embodiments) as a function of the SoC. Furthermore, the integrated circuit unit 10 includes, as a function of the SoC, a restart control unit 51 that can restart the integrated circuit unit 10. In the present embodiment, the operation of restarting the integrated circuit unit 10 is executed according to the abnormality detection result by the second WDT detection unit 50.

The multiple I/O 62 is a circuit that implements an interface with an external circuit, and the integrated circuit unit 10 is connected to the nonvolatile memory 60 and the communication IF 75 via the multiple I/O 62.

FIG. 3 is an explanatory diagram illustrating an example of a station bus and a process bus. The protection control device 1 is connected to a transmission path called a station bus and a transmission path called a process bus. The station bus and the process bus are redundant, and the protection control device 1 has two communication IFs per bus.

The protection control device 1 is connected to a merging unit (MU) device via the process bus. The MU device acquires the electrical quantity (current and voltage) in the power system. The MU device performs analog to dital (A/D) conversion on the acquired electrical quantity signal, and transmits digital information after the A/D conversion by process bus transmission. The protection control device 1 receives information on the electrical quantity transmitted from the MU device via the communication IF 73 and the communication IF 74. At this time, a communication scheme called a sampled value (SV) is used.

The protection control device 1 performs a protection relay calculation on the basis of information on the electrical quantity, and transmits a trip signal to the MU device when a relay operation condition is satisfied. At this time, a communication scheme called generic object oriented substation events (GOOSE) is used. As illustrated in FIG. 3, a plurality of MU devices may be installed in a substation or the like, for example.

In addition, the protection control device 1 is connected to a supervisory control and data acquisition (SCADA) device 100 which is an upper device via the station bus. The protection control device 1 transmits its own device state and the like to the SCADA device 100 and receives command information from the SCADA device 100. At this time, a communication scheme called manufacturing messaging specification (MMS) is used. Communication schemes such as SV, GOOSE, and MMS are defined in the International Electrotechnical Commission (IEC) 61850.

The protection control device 1 is connected to an HI-PC via the communication IF 75. The setting of the protection control device 1 can be checked and changed by operations from the HI-PC.

The WDT detection function in the protection control device 1 of the present embodiment and processing contents calculated in each CPU and each core will be described with reference to FIG. 1. The first CPU 200 is a multi-core CPU including four cores 201 to 204, and the second CPU 210 is a multi-core CPU including two cores 211 and 212. In addition, it is assumed that the first CPU 200 and the second CPU 210 have different architectures, and the CPU more suitable for constructing processing specialized for real-time processing is the second CPU 210.

A plurality of VM virtual machines are mounted on the first CPU 200 by a virtualization technology. In the present embodiment, three virtual machines of a VM 205, a VM 206, and a VM 207 are operated on the first CPU 200. At this time, a virtual CPU is allocated to the virtual machine in the virtualization, but from the viewpoint of securing real-time performance, it is desirable that the virtual CPU and the physical CPU core (cores 201 to 204 in present embodiment) have a one-to-one correspondence. In the present embodiment, it is assumed that the virtual CPU has a one-to-one correspondence with the physical CPU core, and the virtual CPU will not be mentioned.

The allocation of cores to the three virtual machines will be described. The core 201 and the core 202 are allocated to the VM 205, and the VM 205 is a virtual machine on which an operating system (OS) is mounted. The VM 205 performs, for example, processing of a web server for HI-PC or MMS communication processing. In the present embodiment, from the viewpoint of securing the above-described real-time performance, the execution of each task is also allocated to a single physical core. Specifically, for example, the core 201 executes a processing task of a web server for HI-PC, and the core 202 executes an MMS communication processing task.

The core 203 is allocated to the VM 206, and the core 204 is allocated to the VM 207. The VM 206 and the VM 207 are OS-less virtual machines, and implement a bare metal application. The VM 2 performs a relay calculation, and the VM 207 performs GOOSE communication processing. In the VM 206 and the VM 207, since an OS is not interposed and the application is directly executed by the (virtual) CPU, it is suitable for executing processing requiring real-time performance as compared with the case of executing processing on an OS.

A bare metal application is mounted on each core of the second CPU 210. The core 211 performs processing of analyzing SV data (information on electrical quantity) transmitted from the MU device.

The core 212 performs constant monitoring processing. In the constant monitoring processing, the core 212 monitors whether each function constituting the protection control device 1 or each software processing executed in the protection control device 1 is operating soundly, and performs predetermined processing when it is detected that there is a problem in soundness. In addition, the core 211 stores the log of the constant monitoring in the nonvolatile memory 60 in the constant monitoring processing.

By the operation of each core described above, information on the electrical quantity transmitted from the MU device via the process bus is subjected to SV data analysis by the core 211, a relay calculation using the information is executed by the core 203, and subsequently, GOOSE communication processing is executed by the core 204. In addition, constant monitoring processing of monitoring the soundness of the function is performed by the core 212. Since all of these four kinds of processing require real-time performance, they are implemented by an OS-less bare metal application.

On the other hand, the VM 205 to which the core 201 and the core 202 are allocated executes processing having a relatively low real-time requirement level, such as processing of a web server for HI-PC or MMS communication processing.

Next, the clear signal transmitted from each core to the WDT clear signal generation unit 301 will be described. In the core in which the bare metal application operates, clear signal transmission processing is performed by the bare metal application operating in each core.

For example, in the core 211, clear signal transmission processing is performed in the SV data analysis processing. In addition, in the core 203, transmission processing of a clear signal is performed in relay calculation processing that operates on the virtual machine VM 206. As a result, a clear signal is transmitted from each core in the CPU.

In addition, in the virtual machine VM 205 on which the OS is mounted, clear signal transmission processing is performed in each task processed on the OS. In both the processing task of a web server for HI-PC and the MMS communication processing task, individual clear signal transmission processing is performed. Therefore, as illustrated in FIG. 1, two clear signals are transmitted from the VM 205 to the WDT clear signal generation unit 301.

Next, WDT detection processing in the present embodiment will be described. The protection control device 1 of the present embodiment includes two WDT detection units.

The timeout period of the first WDT detection unit 40 in the present embodiment is set to 10 seconds (longer than cycle of any clear signal output from each core to WDT clear signal generation unit 301). That is, the first WDT detection unit 40 detects a watchdog when it is determined that the input signal to itself is interrupted for 10 seconds. In addition, the timeout period of the second WDT detection unit 50 is set to five seconds (longer than cycle of any clear signal output from each core to second WDT detection unit 50 and shorter than timeout period of first WDT detection unit 40).

First, the second WDT detection unit 50 will be described. The second WDT detection unit 50 is a built-in function of the integrated circuit unit 10. The second WDT detection unit 50 of the present embodiment includes a WDT detection unit 501 for first CPU and a WDT detection unit 502 for second CPU.

The WDT detection unit 501 for first CPU receives a WDT_CLR2_1 signal transmitted from the first CPU 200 as input, and detects a watchdog when it is determined that the WDT_CLR2_1 signal is interrupted for a predetermined time. In addition, the WDT detection unit 502 for second CPU receives a WDT_CLR2_2 signal transmitted from the second CPU 210 as input, and detects a watchdog when it is determined that the WDT_CLR2_2 signal is interrupted for a predetermined time.

The second WDT detection unit 50 transmits a WDT_DET2 signal when a watchdog is detected by either the WDT detection unit 501 for first CPU or the WDT detection unit 502 for second CPU.

The timeout periods of the WDT detection unit 501 for first CPU and the WDT detection unit 502 for second CPU are five seconds (longer than cycle of any clear signal output from each core to second WDT detection unit 50 and shorter than timeout period of first WDT detection unit 40). That is, both the WDT detection unit 501 for first CPU and the WDT detection unit 502 for second CPU detect a watchdog when it is determined that the input signal to itself is interrupted for five seconds.

Since the second WDT detection unit 50 is a built-in function of the integrated circuit unit 10, WDT detection cannot be performed for each core when virtualization is performed. Therefore, one signal is input from each CPU to the second WDT detection unit 50. In the present embodiment, the WDT_CLR2_1 signal is transmitted from the core 203 in which the VM 206 that performs the relay calculation operates, and the WDT_CLR2_2 signal is transmitted from the core 211 that performs the SV data analysis processing. The relay calculation and the SV data analysis processing are processing having a particularly high importance in implementing the protection control function among the processing executed by each CPU. As described above, a configuration is adopted in which runaway of the calculation function is detected with respect to processing having a particularly high importance in each CPU.

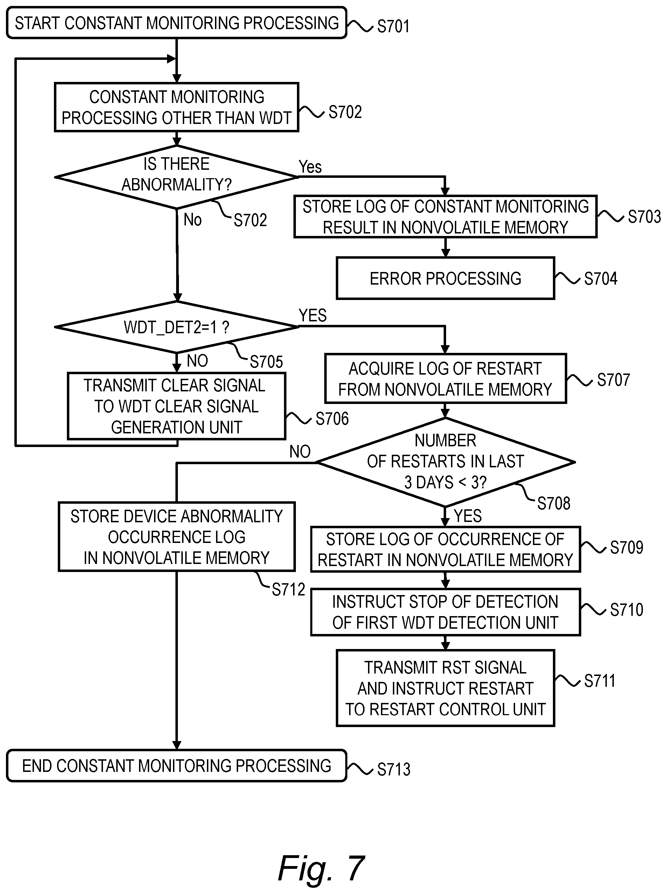

The second WDT detection unit 50 transmits the detection signal WDT_DET2 to the core 212 that performs the constant monitoring processing. This may be implemented, for example, as an interrupt to the core 212. When receiving WDT_DET2 during the execution of the constant monitoring processing, the core 212 transmits an RST signal for restarting the integrated circuit unit 10 to the restart control unit 51. Details of the constant monitoring processing by the core 212 will be described later with reference to FIG. 7.

The first WDT detection unit 40 and the WDT clear signal generation unit 301 will be described. The first WDT detection unit 40 is an IC having a watchdog timer function, and is an IC different from the IC constituting the integrated circuit unit 10. The first WDT detection unit 40 in the present embodiment is a dedicated IC for executing WDT detection.

The first WDT detection unit 40 receives the WDT_CLR1 signal transmitted from the WDT clear signal generation unit 301 as input, and transmits the first watchdog detection signal WDT_DET1 when it is determined that the WDT_CLR1 signal is interrupted for a predetermined time. The WDT_DET1 signal is a signal indicating an external alarm.

The WDT clear signal generation unit 301 is hardware configured by an FPGA circuit in the integrated circuit unit 10. The WDT clear signal generation unit 301 receives, as input, a plurality of clear signals periodically transmitted from the arithmetic processing unit 20, monitors changes in values of the plurality of clear signals, and outputs the first timer clear signal WDT_CLR1 when the number of clear signals whose values have changed reaches a predetermined number.

In the present embodiment, the number of clear signals input to the WDT clear signal generation unit 301 is six, and the WDT clear signal generation unit 301 outputs the first timer clear signal WDT_CLR1 when the number of clear signals whose values have changed is six. In addition, the WDT clear signal generation unit 301 of the present embodiment has a function of stopping WDT detection in the first WDT detection unit 40.

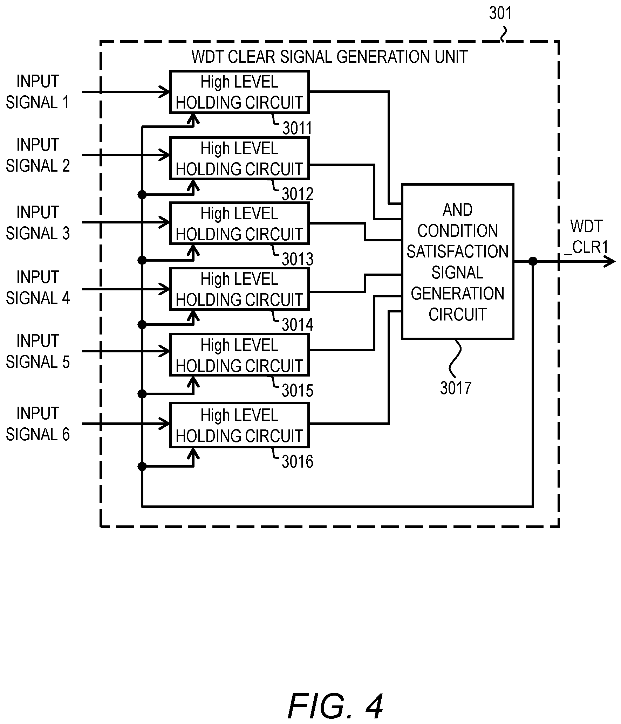

FIG. 4 is an explanatory diagram illustrating a configuration example of the WDT clear signal generation unit 301. The WDT clear signal generation unit 301 includes High level holding circuits 3011 to 3016 and an AND condition satisfaction signal generation circuit 3017. Each of input signals 1 to 6 (clear signals) is a logic signal having a value of 0 or 1, and is a signal indicating clear in a case where the value is 1. Note that description of the function of stopping WDT detection in the first WDT detection unit 40 is omitted.

The High level holding circuits 3011 to 3016 monitor the values of the input signals 1 to 6, respectively, and hold the values when the values monitored by themselves change to 1. As a result, when there is a clear signal transmitted from the arithmetic processing unit 20, the value is held by any one of the High level holding circuits 3011 to 3016 corresponding to the clear signal.

The AND condition satisfaction signal generation circuit 3017 takes the AND of the outputs of the High level holding circuits 3011 to 3016, and if the result of the AND operation is 1, it outputs a High level for a predetermined period. An output signal of the AND condition satisfaction signal generation circuit 3017 is the first timer clear signal WDT_CLR1.

As a result, when the number of clear signals whose values have changed is six, the AND condition satisfaction signal generation circuit 3017 outputs the WDT_CLR1 signal. Furthermore, the AND condition satisfaction signal generation circuit 3017 also outputs the WDT_CLR1 signal to the High level holding circuits 3011 to 3016, and the High level holding circuits 3011 to 3016 reset the held value when the WDT_CLR1 signal is input.

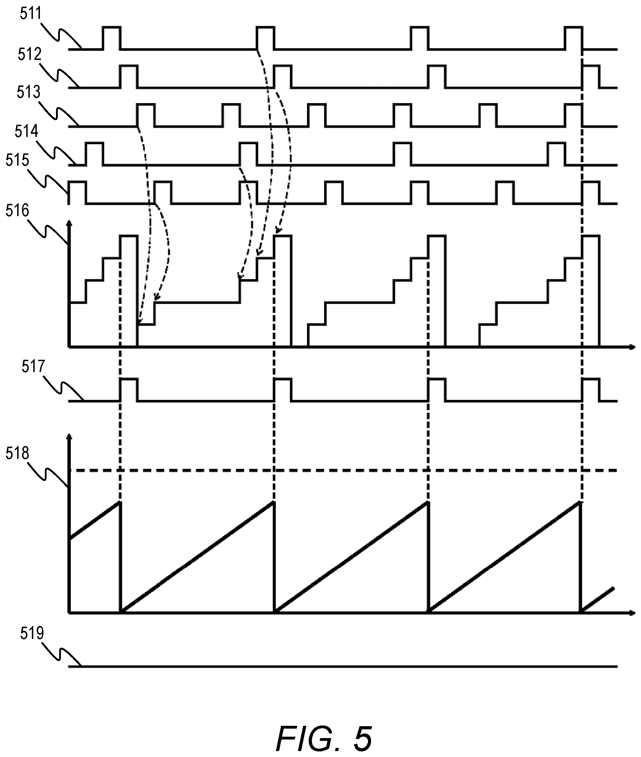

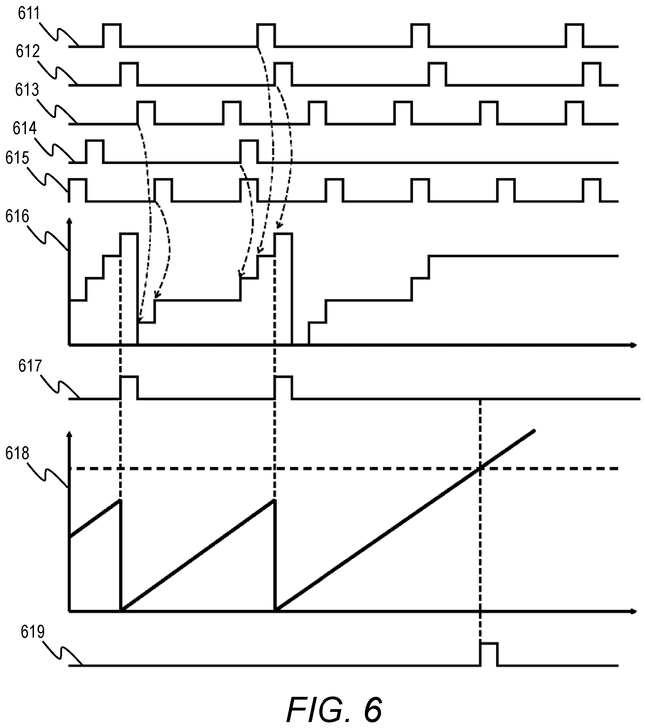

FIGS. 5 and 6 are explanatory diagrams illustrating examples of timing charts of internal signals in the WDT clear signal generation unit 301 and the first WDT detection unit 40 according to the present embodiment. Timing chart 511 and timing chart 611 illustrate changes in the clear signal output from the VM 205 (i.e., core 201 and core 202).

Note that, from the VM 205, one clear signal is output from each of the core 201 and the core 202, and a total of two clear signals are output. However, in the examples of FIGS. 5 and 6, the timing charts of the two signals mentioned above are assumed to be the same in order to simplify the description. The timing charts of two signals are illustrated as one common timing chart in timing chart 511 and timing chart 611.

Timing chart 512 and timing chart 612 illustrate changes in the clear signal output from the VM 206 (i.e. core 203). Timing chart 513 and timing chart 613 illustrate changes in the clear signal output from the VM 207 (i.e. core 204).

Timing chart 514 and timing chart 614 illustrate changes in the clear signal output from the core 211. Timing chart 515 and timing chart 615 illustrate changes in the clear signal output from the core 212.

Timing chart 516 and timing chart 616 illustrate a change in the number of signals whose values have changed to 1 among the input signals of the AND condition satisfaction signal generation circuit 3017. Timing chart 517 and timing chart 617 illustrate changes in the WDT_CLR1 signal. Timing chart 518 and timing chart 618 illustrate changes in the internal count value (value corresponding to elapsed time from last input of WDT_CLR1 signal to first WDT detection unit 40) of the first WDT detection unit 40. Timing chart 519 and timing chart 619 illustrate changes in the WDT_DET1 signal.

Note that the number of signals illustrated in timing chart 516 and timing chart 616 and the internal count value illustrated in timing chart 518 and timing chart 618 are not signals illustrated in FIG. 4, but schematically represent the internal operations of the AND condition satisfaction signal generation circuit 3017 and the first WDT detection unit 40.

FIG. 5 is an example of a timing chart of internal signals in a case where all the cores operate normally. Since the WDT clear signal generation unit 301 of the present embodiment monitors changes in the values of the six input signals by the High level holding circuits 3011 to 3016 and determines that the number of clear signals whose values have changed is six, the WDT clear signal generation unit 301 can operate normally even when the timings at which the individual signals change to 1 do not coincide with each other as illustrated in FIG. 5.

In addition, even when the cycle in which each core periodically transmits the clear signal is different, the WDT clear signal generation unit 301 can operate normally. In FIG. 5, the cycle of the input signal from the VM 207 (core 204) illustrated by timing chart 513 and the cycle of the input signal from the core 212 illustrated by timing chart 515 are shorter than those of the other input signals.

Even in this case, since each of the High level holding circuits 3011 to 3016 holds the High level of the input clear signal, it is possible to detect that "the number of clear signals whose values have changed is six".

In addition, in the example of FIG. 5, the length of time during which each core sets the value of the clear signal to 1 is the same, but even when the length of time during which some or all of the cores set the value of the clear signal to 1 is different, the WDT clear signal generation unit 301 can operate normally.

When there is no irregularity in the cycle of the clear signal from each core, the WDT_CLR1 signal illustrated by timing chart 517 periodically becomes 1 (at cycle shorter than timeout period of first WDT detection unit 40). As a result, since the internal count value illustrated by timing chart 518 does not reach the timeout period of the first WDT detection unit 40 (dotted line in horizontal direction in timing chart 518), the first WDT detection unit 40 does not perform WDT detection (i.e., WDT_DET1 signal illustrated by timing chart 519 does not become 1).

FIG. 6 is an example of a timing chart in a case where some cores operate abnormally. FIG. 6 illustrates an example in which the change in the value of the clear signal from the core 211 illustrated by timing chart 614 is interrupted midway. Since the output of the High level holding circuit 3015 does not change to 1 after the clear signal from the core 211 is interrupted, the WDT_CLR1 signal that is the output signal of the AND condition satisfaction signal generation circuit 3017 maintains 0 as illustrated in timing chart 617.

As a result, since the internal count value illustrated by timing chart 618 reaches the timeout period of the first WDT detection unit 40 (dotted line in the horizontal direction in timing chart 618), the first WDT detection unit 40 transmits WDT_DET1 (i.e., WDT_DET1 signal illustrated by timing chart 619 becomes 1).

FIG. 7 is a flowchart illustrating an example of constant monitoring processing executed by the core 212. As illustrated in FIG. 1, in the constant monitoring processing by the core 212, the second watchdog detection signal WDT_DET2 output from the second WDT detection unit 50 is input to the core 212.

When starting the constant monitoring processing (step S701), the core 212 executes the constant monitoring processing other than WDT detection and collects the monitoring result (step S702). The core 212 determines whether or not there is an abnormality in the monitoring result collected in step S702 (step S703).

When it is determined that there is an abnormality in a constant monitoring item other than the WDT detection (step S702: YES), the core 212 stores a log of the constant monitoring result in the nonvolatile memory 60 (step S703), and executes error processing according to the error content (step S704). Since WDT detection will be described in the embodiments, details of the constant monitoring processing in step S702 and the error processing in step S704 will be omitted.

When determining that there is no abnormality in the constant monitoring item other than the WDT detection (step S702: NO), the core 212 determines whether or not the value of the second watchdog detection signal WDT_DET2 is 1 (step S705).

When the core 212 determines that the value of the second watchdog detection signal WDT_DET2 is not 1 (step S705: NO), since the soundness can be confirmed in all the constant monitoring items including WDT, the core 212 transmits the clear signal to the WDT clear signal generation unit 301 (step S706), and the processing returns to step S702. As a result, when the system is operating normally, constant monitoring and transmission of the clear signal from the core 212 are repeatedly performed.

When the core 212 determines that the value of the second watchdog detection signal WDT_DET2 is 1 (step S705: YES), it means that the transmission of the clear signal from one of the cores is interrupted for five seconds and WDT is detected by the second WDT detection unit 50. Therefore, the core 212 acquires a log of restart from the nonvolatile memory 60 (step S707), and determines whether or not the number of restarts in the last three days (within predetermined period) is less than three (predetermined number of times) (step S708).

When it is determined that the number of restarts in the last three days is less than three (step S708: YES), the core 212 proceeds to restart processing of the protection control device 1. Specifically, the core 212 stores a log of occurrence of a restart in the nonvolatile memory 60 (step S709), and instructs the WDT clear signal generation unit 301 to stop detection of the first WDT detection unit 40 (step S710).

Thereafter, the core 212 transmits an RST signal to the restart control unit 51 to instruct the restart control unit 51 to restart (step S711). The restart processing of the protection control device 1 is started by the restart control unit 51 by the processing in step S711.

In addition, since the core 212 instructs the detection stop of the first WDT detection unit 40 in step S710, it is possible to prevent the first WDT detection unit 40 from performing WDT detection during the restart processing of the protection control device 1. Note that the WDT detection by the first WDT detection unit 40 is resumed during a restart or after completion of the restart (since WDT detection by first WDT detection unit 40 is not operation included in constant monitoring processing, it is not illustrated in FIG. 7).

On the other hand, when the core 212 determines that the number of restarts in the last three days is not less than 3 (predetermined number of times) (step S708: NO), the restart processing of the protection control device 1 is not executed, and an external alarm is output. Specifically, the core 212 stores a log of occurrence of a device abnormality in the nonvolatile memory 60 (step S712), and ends the constant monitoring processing (step S713).

Since the transmission of the clear signal from the core 212 to the WDT clear signal generation unit 301 is stopped by this operation, an operation is performed in which the WDT is detected by the first WDT detection unit 40 and the WDT_DET1 signal indicating an external alarm is output.

Hereinafter, effects of the present embodiment will be described. A first effect is that an abnormal state of the arithmetic processing unit can be satisfactorily detected.

Since a plurality of protocols are used in IEC 61850, high-load software processing such as protocol analysis processing is required for a conventional protection control device to which IEC 61850 is not applied, and there is processing requiring real-time performance. Specifically, four kinds of processing including the SV data analysis processing, the relay calculation processing, the GOOSE communication processing, and the constant monitoring processing correspond to such processing. It is desirable that a physical CPU core is exclusively allocated to the processing requiring real-time performance.

On the other hand, as described above, the first CPU 200 and the second CPU 210 have different architectures, and the CPU more suitable for constructing processing specialized for real-time processing is the second CPU 210. However, since the second CPU 210 is a two-core CPU, the number of cores is insufficient to exclusively allocate cores to each of the four kinds of processing.

Therefore, in the present embodiment, in order to solve this problem, the virtualization technology is applied to the first CPU 200, and the VM 206 and the VM 207 that perform OS-less processing are mounted. As a result, it is possible to allocate a physical CPU core to processing requiring real-time performance.

On the other hand, the web server for HI-PC and the MMS communication processing based on TCP/IP communication have a relatively low real-time requirement level. Therefore, by executing these kinds of processing by an application on an OS instead of by a bare metal application, more advanced processing can be implemented by combining the OS function. For this reason, by applying the virtualization technology, it is possible to construct an advanced system using both real-time performance and the OS function.

However, with the above configuration, real-time performance can be achieved, but there is a problem that the built-in watchdog detection function cannot adequately handle the resulting system architecture. Unlike the conventional protection control device, the protection control device 1 of the present embodiment executes the SV data analysis processing, the relay calculation processing, and the GOOSE communication processing in a distributed manner on the cores, but cannot maintain the protection control function if any one of the processing stops. Therefore, in the protection control device that is highly required for stable operation, it is desirable to monitor whether arithmetic processing in each core is performed soundly.

In order to solve this problem, the protection control device 1 of the present embodiment is provided with the WDT clear signal generation unit 301. The WDT clear signal generation unit 301 receives, as input, a plurality of clear signals periodically transmitted from the arithmetic processing unit 20, monitors changes in values of the plurality of clear signals, and outputs the first timer clear signal WDT_CLR1 when the number of the clear signals whose values have changed reaches a predetermined number. Furthermore, the WDT clear signal generation unit 301 supplies the first timer clear signal WDT_CLR1 to the first WDT detection unit 40 which is an IC different from the IC constituting the integrated circuit unit 10.

As a result, the protection control device 1 of the present embodiment can solve the problem that the number of cores detectable by the WDT detection built in the SoC is insufficient. In addition, in the WDT detection by the second WDT detection unit 50 built in the SoC of the present embodiment, as can be seen from the fact that the second watchdog detection signal WDT_DET2 is once received by the constant monitoring processing by the core 212, software processing is interposed until a restart is executed.

In the present embodiment, if the constant monitoring processing by the core 212 runs away, the runaway of the constant monitoring processing is detected by the first WDT detection unit 40 which is a dedicated IC for WDT detection. Accordingly, the WDT detection by the first WDT detection unit 40, which is another IC provided outside the SoC, has higher reliability than the WDT function by the second WDT detection unit 50 built in the SoC.

Therefore, the output signal of the WDT clear signal generation unit 301 is output not to the second WDT detection unit 50 built in the SoC but to the first WDT detection unit 40 that is an IC different from the IC constituting the arithmetic processing unit 20. As in the present embodiment, the reliability of the WDT detection can be improved by a configuration in which the final WDT detection is provided in an IC different from the IC constituting the arithmetic processing unit 20.

Patent Literature 1 describes a virtual CPU, but it is merely a description in which the CPU is extended to a virtual CPU, and allocation of a core to a VM is not considered in the technology described in Patent Literature 1. For example, a configuration in which two VMs are built on a two-core CPU and two cores are allocated to each VM is also a form of virtualization. However, in a case where such a form is adopted, even if one core fails, there is a possibility that each VM continues to operate with one core, and the physical failure of the core cannot be accurately detected.

In the present embodiment, the core 203 is allocated to the VM 206, and the core 204 is allocated to the VM 207. In other words, each core included in the CPU is allocated to any one of the virtual machines. As a result, when the core 203 fails, the clear signal from the VM 206 to which the core 203 is allocated stops. As a result, the protection control device 1 of the present embodiment can accurately detect the physical failure of the core.

Furthermore, in the present embodiment, the WDT detection is performed for each task operating on the OS, so that an abnormal state of the arithmetic processing unit 20 can be more favorably detected. In the related art, the survival of the OS can be detected by WDT detection, but the soundness of each task operating on the OS depends on detection by the OS.

In the related art, although the vital monitoring of the task itself exists as a function of the OS, the task itself appears as a living state even in a case where processing in the task runs away and is not normally performed. In order to correctly detect whether the processing of the task is performed soundly, it is desirable to transmit the clear signal of the WDT in each task and detect the clear signal by the WDT detection function as in the present embodiment.

Furthermore, in the present embodiment, execution of each task is allocated to a single physical core. As a result, when the core 201 fails, the clearing from the HI-PC web server processing task allocated to and executed on the core 201 is stopped, and when the core 202 fails, the clearing from the MMS communication processing allocated to and executed on the core 202 is stopped. As described above, in the present embodiment, by allocating one or more tasks for transmitting the clear signal to each of the cores allocated to the OS as processing in a single core, it is possible to accurately detect a physical failure of the core.

Note that in the present embodiment, the clear signal is transmitted from the two tasks operating on the OS operating on the two cores 201 and 202, but the clear signal may be transmitted from tasks of a number larger than the number of cores allocated to the OS, that is, three or more tasks. Even in that case, it is desirable to allocate at least one of the three tasks as processing in a single core to each of the two cores 201 and 202 allocated to the OS.

In addition, the configuration in which each task is allocated to a single physical core and executed has an effect even when virtualization is not performed. For example, the present invention is similarly applicable to a case where an OS is operated without using virtualization in the first CPU 200 which is a four-core CPU.

In addition, since the WDT detection is executed to detect runaway of software processing or the like, it is desirable that no software is interposed in the WDT detection. The function of the WDT clear signal generation unit 301 can be configured by software, but is configured as hardware called an FPGA circuit in the present embodiment. Therefore, in the present embodiment, WDT detection can be performed satisfactorily without interposing software processing.

Furthermore, the present embodiment is particularly suitable when the integrated circuit unit 10 is an SoC incorporating the FPGA circuit unit 30. In the present embodiment, six signals are input to the WDT clear signal generation unit 301. In a case where the FPGA circuit unit 30 is not an IC common to the arithmetic processing unit 20 but is another IC, it is necessary to output six signal lines from the IC of the arithmetic processing unit 20, wire them on the substrate, and input them to the FPGA.

However, in the present embodiment, these six signals are internal signals of the SoC, and can be implemented without increasing the number of wirings on the substrate and pins of the IC. That is, it is particularly preferable when the WDT clear signal generation unit 301 is configured as hardware in an IC common to the arithmetic processing unit 20.

In addition, in the present embodiment, unlike the technology described in Patent Literature 1, since the present embodiment is configured as an FPGA circuit, as described with reference to FIG. 5, there are no restrictions on the timing and the cycle in which each clear signal changes and the period during which the value of the clear signal changes. This is suitable for securing real-time performance of software processing.

In a case where it is necessary to adjust the timing between the cores, communication processing between the cores occurs accordingly. Furthermore, the relay calculation processing in the core 203 needs to be executed for each electrical angle of 30 degrees. On the other hand, the SV reception processing in the core 211 is processing of analyzing received data each time it is received. Therefore, it is not necessary to execute the processing for every 30 degrees of electrical angle; in fact, doing so would become a constraint.

As described above, in the protection control device 1 of the present embodiment, since the processing performed in each core is different, there is an advantage in securing real-time performance of the protection control function by adopting the WDT detection configuration without restriction with respect to the timing and the cycle in which each clear signal changes and the period during which the value of the clear signal changes.

Furthermore, in the present embodiment, by configuring the WDT clear signal generation unit 301 as an FPGA circuit, the number of clear signals input to the WDT clear signal generation unit 301 can be freely designed. In addition, the WDT clear signal generation unit 301 designed as a circuit that receives six input signals as in the present embodiment can also have a function of reducing the number of clear signals to be input. As described above, the embodiments are particularly suitable in the case of an SoC in which the arithmetic processing unit 20 and the FPGA circuit are mounted on a common IC.

The second effect according to the present embodiment is that it is possible to satisfactorily recover from the abnormal state of the arithmetic processing unit 20.

When the WDT is detected, the conventional protection control device which is required to have high reliability transmits an external alarm and locks an output of the conventional protection control device in order to prevent a malfunction. However, in this case, there is a problem that the output of the conventional protection control device is locked and is not used even if the failure is temporary.

In addition, the technology described in Patent Literature 2 recovers from a temporary failure by restarting the device by WDT detection. However, in the protection control system, if the factor causing the WDT detection is a permanent failure, it is desirable to transmit an external alarm instead of repeating a restart. Therefore, the technology described in Patent Literature 2 has a problem that it can cope with only one of a temporary failure and a permanent failure.

On the other hand, according to the configuration of the present embodiment, when the software processing in any core runs away, WDT is detected by the second WDT detection unit 50 after five seconds, and the processing transitions to the restart processing of the protection control device 1. As a result, it is possible to recover from the temporary failure. Therefore, it is possible to solve the problem in the prior art in that an external alarm is output and the output of the device is locked and unused due to a temporary failure.

In addition, the protection control device 1 of the present embodiment also includes the first WDT detection unit 40. In the present embodiment, when software processing in any core runs away, WDT is detected by the first WDT detection unit 40 after 10 seconds, and an external alarm is transmitted. That is, the protection control device 1 of the present embodiment transmits an external alarm when a permanent failure occurs.

In the protection control system, if the factor causing the WDT detection is a permanent failure, it is desirable to transmit an external alarm instead of repeating a restart. This is because the protection control device 1 during a restart cannot implement the protection control function, and the restart period should be made as less frequent as possible.

In order to solve this problem, the protection control device 1 of the present embodiment includes the nonvolatile memory 60 that records information regarding a restart, and when the information regarding the restart recorded in the nonvolatile memory 60 satisfies a predetermined condition, the protection control device 1 determines that the failure is not temporary but permanent, and does not execute the restart of the protection control device 1.

In the present embodiment, the timeout period of the second WDT detection unit 50 is shorter than the timeout period of the first WDT detection unit 40. As a result, the protection control device 1 of the present embodiment can first attempt to recover from a temporary failure, and output an external alarm when the failure is not temporary.

In addition, the SoC often incorporates a function like the restart control unit 51 of the present embodiment. In the present embodiment, since the second WDT detection circuit is implemented by the SoC built-in function, the notification signal to the restart control unit 51 is an internal signal of the SoC (integrated circuit unit 10), and can be implemented without increasing the number of wirings on the substrate and pins of the IC. That is, the present embodiment is particularly suitable when the WDT detection unit that performs the restart operation at the time of WDT detection, that is, the second WDT detection unit 50 is a built-in function of an IC common to the arithmetic processing unit 20.

The application range of the WDT detection configuration of the present embodiment is not limited to the protection control device 1, and is applicable to all information processing devices. Note, however, that the application of the WDT detection of the present embodiment to the protection control device 1 is particularly effective in that the WDT detection function is strongly required from the viewpoint of the necessity of stable operation and that the virtualization technology needs to be used because real-time performance is required.

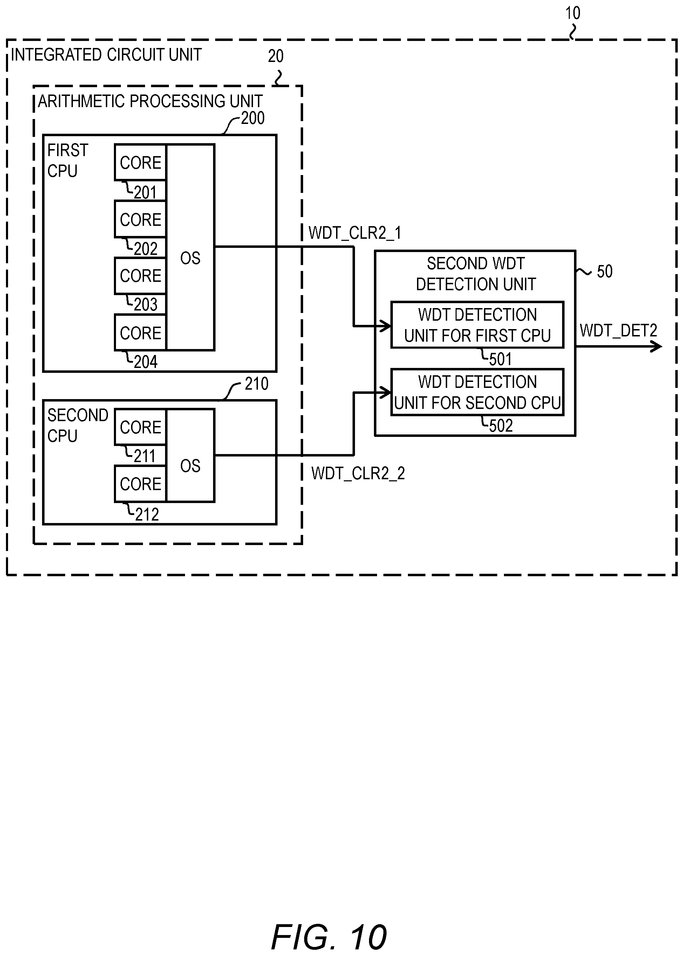

FIG. 10 is an explanatory diagram illustrating a usage example of the second WDT detection unit 50. Even in the case of the second WDT detection unit 50 of the present embodiment, for example, as in the integrated circuit unit 10 illustrated in FIG. 10, when an OS is mounted in each CPU and the CPU is used as a multi-core CPU, it is considered that the device is sufficient as a WDT detection function.

However, as in the protection control device 1 of the present embodiment, the inventor has found that in a protection control device having a high real-time requirement level, that is, a protection control device to which IEC 61850 requiring high-load software processing such as protocol analysis processing is applied, it is necessary to implement a protection control function by an OS-less bare metal application, and the configuration of the present embodiment is necessary in order to achieve both improvement in real-time performance by virtualization and improvement in reliability of WDT detection.

In the present embodiment, the second watchdog detection signal WDT_DET2 is received once by the core 212 performing the constant monitoring processing, but the second watchdog detection signal WDT_DET2 may be received by a dedicated CPU or a CPU core included in the SoC instead of the CPU programmable by the user.

With the above configuration, it is possible to satisfactorily detect an abnormal state of the arithmetic processing unit 20 and recover from the abnormal state.

### [Second Embodiment]

In First Embodiment, the second watchdog detection signal WDT_DET2 is once received by the core 212 performing the constant monitoring processing, and the restart processing is executed by transmitting the RST signal after software processing is interposed. On the other hand, in the present embodiment, software processing is not interposed in restart processing. Hereinafter, differences from First Embodiment will be mainly described, and description of points similar to those of First Embodiment will be omitted as appropriate.

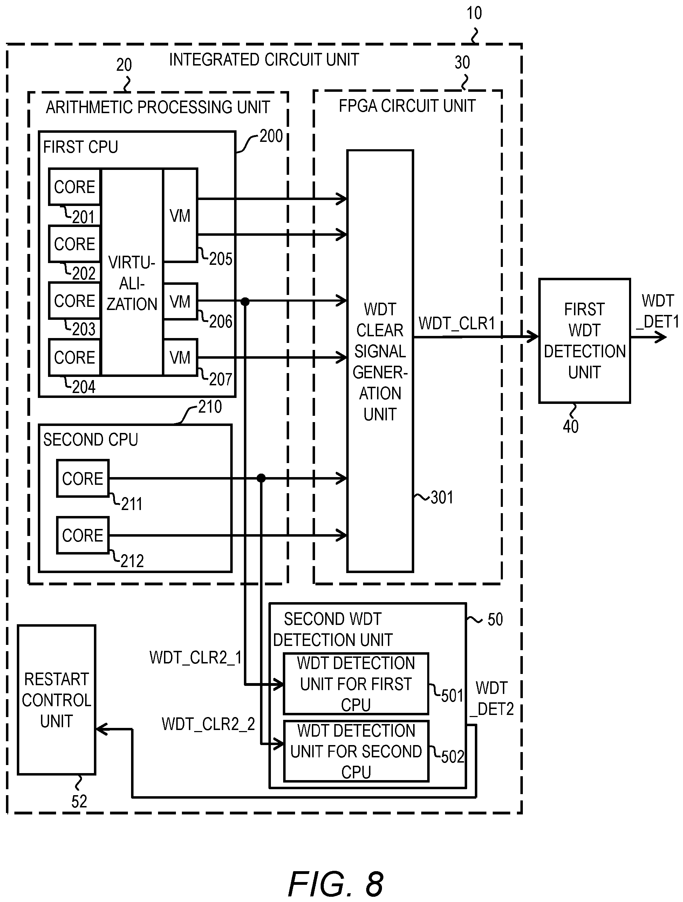

FIG. 8 is a block diagram illustrating an example of a configuration related to watchdog timer detection in a protection control device 1. An integrated circuit unit 10 of the present embodiment is different from that of Example 1 in that a restart control unit 52 is included instead of the restart control unit 51.

Note that the configuration example of the protection control device 1 of the present embodiment is similar to that of FIG. 2 in First Embodiment except that the restart control unit 52 is provided instead of the restart control unit 51, and thus the description will be omitted.

A second watchdog detection signal WDT_DET2 output from a second WDT detection unit 50 is directly input to the restart control unit 52. The restart control unit 52 has a function of executing restart processing of the protection control device 1 when the second watchdog detection signal WDT_DET2 is input to the restart control unit 52. In addition, the restart control unit 52 can invalidate the restart function by the WDT_DET2 signal.

Furthermore, the restart control unit 52 includes a recording unit that records whether or not it is a restart by the WDT_DET2 signal (restart factor information), and can refer to the information at the time of the next device activation.

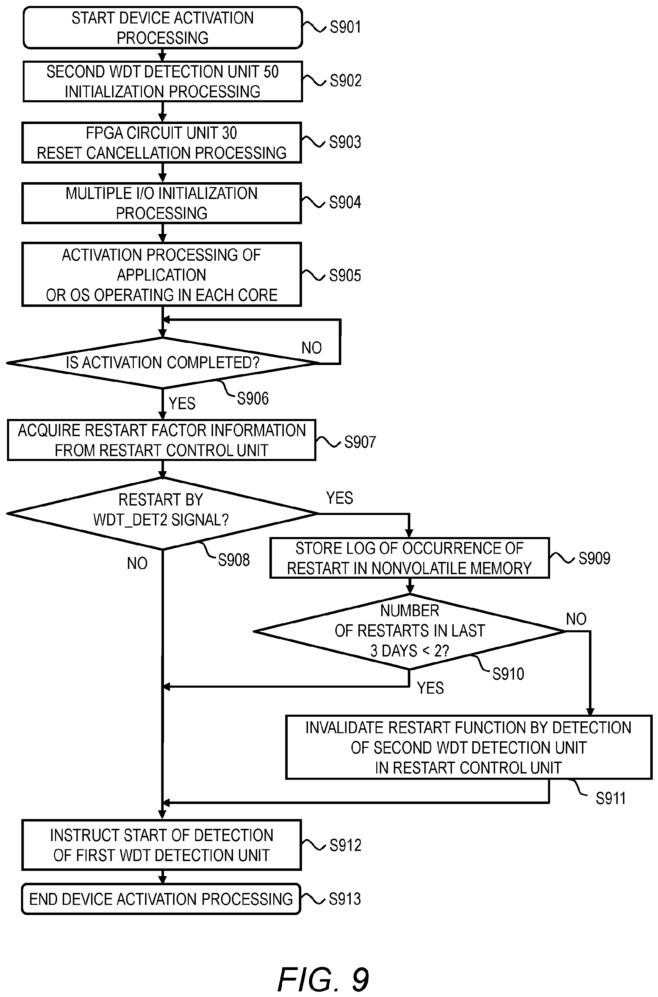

FIG. 9 is a flowchart illustrating an example of device activation processing. Note that the device activation processing is executed by a first CPU 200.

When starting the device activation processing (step S901), the first CPU 200 executes initialization processing of the second WDT detection unit 50 (step S902). When the initialization processing in step S902 is started, it is assumed that WDT detection of the second WDT detection unit 50 is started. Note that in the following steps, although clear signal transmission processing from the first CPU 200 will not be described, it is assumed that the clear signal is periodically transmitted as in First Embodiment.

The first CPU 200 performs reset cancellation processing of an FPGA circuit unit 30 (step S903) and multiple I/O initialization processing (step S904), and executes a bare metal application that operates in each core or OS activation processing and activation processing of a task that operates on the OS (step S905). Thereafter, the first CPU 200 waits until the activation is completed (step S906).

When the first CPU 200 determines that the activation processing in step S905 is completed (S906: YES), it acquires restart factor information from the restart control unit 52 (step S907). The first CPU 200 refers to the acquired restart factor information to determine whether the device activation processing being executed is a restart by the WDT_DET2 signal (step S908).

When determining that the device activation processing being executed is not a restart by the WDT_DET2 signal (step S908: NO), the first CPU 200 proceeds to step S912 described later.

When determining that the device activation processing being executed is a restart by the WDT_DET2 signal (step S908: YES), the first CPU 200 stores a log of the occurrence of the restart in a nonvolatile memory 60 together with time information and the like (step S909). At this time, it is assumed that the first CPU 200 also acquires log information of past restart occurrence.

The first CPU 200 refers to the log information of occurrence of a restart and determines whether or not the number of restarts in the last three days (within predetermined period) is less than two (less than predetermined number) (step S910). When determining that the number of restarts in the last three days is less than two (step S910: YES), the first CPU 200 proceeds to step S912 described later.

When the first CPU 200 determines that the number of restarts in the last three days is not less than two (step S910: NO), the restart function by the detection of the second WDT detection unit 50 in the restart control unit 52 is invalidated (step S911). As a result, even in a case where WDT detection is performed in the second WDT detection unit 50 thereafter, a restart by the restart control unit 52 is not executed, and as a result, WDT detection is performed by a first WDT detection unit 40. After step S911, the processing proceeds to step S912.

The first CPU 200 instructs a WDT clear signal generation unit 301 to start detection of the first WDT detection unit 40 (step S912), and ends the device activation processing (step S913).

The effect of the present embodiment is that, in addition to the effect according to First Embodiment, recovery of an arithmetic processing unit 20 from an abnormal state can be more favorably performed. According to the present embodiment, software processing is not interposed in the restart processing after the WDT is detected in the second WDT detection unit 50. Therefore, it is possible to more favorably recover the arithmetic processing unit 20 from the abnormal state.

In First Embodiment, a recording unit that records information indicating that a restart based on the WDT detection result in the second WDT detection unit 50 is performed is included in the nonvolatile memory 60, and processing of determining whether it is a temporary failure or a permanent failure from the information is performed before the restart.

On the other hand, in Second Embodiment, the recording unit that records the information indicating that the restart based on the WDT detection result in the second WDT detection unit 50 is performed is included in the restart control unit 52, and the processing of determining whether it is a temporary failure or a permanent failure from the information is performed after the restart.

As described above, various embodiments can be considered as a method of implementing the recording unit that records the information indicating that the restart based on the WDT detection result in the second WDT detection unit 50 is performed and a timing of performing the processing of determining whether it is a temporary failure or a permanent failure from the information, and the configuration described in the embodiments is merely an example.

In the above examples, the storage destination of the log of the restart is set to the nonvolatile memory 60. However, the log of the restart may be stored in a storage destination other than the nonvolatile memory 60. For example, a restart log may be stored in a SCADA device 100 outside the protection control device 1, or a restart log may be stored in a built-in memory 61.

In the present embodiment, the condition for determining whether to execute a restart based on the WDT detection result in the second WDT detection unit 50 is a condition based on the number of restarts in the last three days indicated by the restart factor information. Note, however, that the numerical value of the period of three days or the number of restarts is merely an example of a predetermined condition for determining whether the failure is temporary or permanent.

In the embodiments, an example in which the protection control device 1 includes one integrated circuit unit 10 has been described. However, in the protection control device 1, a configuration is known in which a main detection (main element) and a fault detection (FD element) are configured by separate hardware inside the protection control device.

In this configuration, the final trip command is a signal obtained by obtaining AND of the trip command by the main element and the trip element from the FD element. As described above, the embodiments are also applicable to a case where the protection control device 1 includes a plurality of integrated circuit units 10.

In addition, the protection control device 1 may be made redundant. As described above, in the configuration using the main element and the FD element or the configuration in which the protection control device 1 itself is made redundant, even if WDT detection is performed in the integrated circuit unit 10, the protection control function is maintained as a whole system. That is, the embodiments are preferably used in combination with the configuration including the main element and the FD element or the configuration in which the protection control device 1 itself is made redundant.

In the embodiments, the example of the digital protection control system according to IEC 61850 has been described, but the WDT detection method in the embodiments can be similarly applied to the protection control device 1 that does not use IEC 61850.

Although the protection control device 1 has been described in the embodiments, the present invention is not limited to the protection control device 1, and the WDT detection method in the embodiments is applicable to all information processing devices.

As an example other than the protection control device 1, for example, the WDT detection method in the embodiments can also be applied to an automobile having a function of automatic driving using an image of an in-vehicle camera. As a modification of First Embodiment, an example of processing calculated in each CPU and each core in a case where the configuration (FIG. 1) related to WDT detection in First Embodiment is applied to an automobile having an automatic driving function will be described.

A VM 205, which is a virtual machine on which the OS is mounted, performs advanced arithmetic processing such as driving trajectory calculation of automatic driving calculation, video output processing related to car navigation, and communication processing with the outside. That is, as in the case of First Embodiment, the VM 205 is allocated with processing that has a relatively low real-time requirement level and requires advanced processing to be implemented as an application on the OS.

A VM 206 performs analysis processing of the video received from the in-vehicle camera mounted on the automobile. The VM 206 performs primary processing on data periodically received based on the frame rate by the bare metal application, and passes the data to the driving trajectory calculation of the VM 205. In addition, a VM 207 performs vehicle body control such as steering wheel operation.

Two cores constituting a second CPU 210, which is a CPU capable of constructing processing specialized for real-time processing, respectively execute engine control and constant monitoring processing similar to the case of First Embodiment.

As described above, the embodiments is applicable not only to the protection control device 1 but also to all information processing devices.

In addition, in the WDT detection method in the embodiments, for example, as described with reference to FIG. 6, when the value of the clear signal changes, it is determined to be normal, and when the change of the value of the clear signal is interrupted midway, it is determined to be abnormal, but the WDT detection method is not limited thereto. The above WDT detection method can detect, for example, a case where the clear signal transmission processing cannot be executed due to runaway of the software processing.

However, the abnormal mode of the software processing is not limited to the above case, and there may be a case where the clear signal transmission processing is executed at a high frequency due to a breakdown of the software processing.

For example, there is a case where the value of the clear signal changes every 0.1 seconds at the normal time, whereas the value of the clear signal changes every 0.01 seconds at the abnormal time. In order to detect such an abnormality, it is only required to detect whether or not the cycle in which the value of the clear signal changes is equal to or less than a specific cycle, in addition to detecting whether or not the cycle in which the value of the clear signal changes is equal to or more than a specific cycle. Furthermore, not only the cycle in which the value of the clear signal changes but also the time during which the clear signal becomes 1 may be monitored.

As described above, the WDT detection method is not limited to monitoring "whether or not the value of the clear signal has changed", and can be more generally expressed as monitoring "whether or not the change in the value of the clear signal is normal or abnormal". The present invention is similarly applicable to the above-described case.

That is, the WDT clear signal generation unit 301 of First Embodiment may monitor whether changes in the values of a plurality of clear signals are normal or abnormal, and output the first timer clear signal WDT_CLR1 when the number of clear signals whose values change normally reaches a predetermined number.

Furthermore, the first WDT detection unit 40 of First Embodiment may receive the first timer clear signal WDT_CLR1 transmitted from the integrated circuit unit 10 as input, and transmit the first watchdog detection signal WDT_DET1 when an abnormal state of a change in the value of the first timer clear signal WDT_CLR1 continues for a predetermined time.

Furthermore, in First Embodiment, the timeout period of the second WDT detection unit 50 is made shorter than the timeout period of the first WDT detection unit 40. This is also used for a case where it is determined that there is an abnormality when a change in the value of the clear signal is interrupted midway. The timeout period in the embodiments is a time for determining that the change in the value of the clear signal is interrupted, in other words, a time for determining that the abnormal state continues. Therefore, the timeout period in the embodiments can be generally expressed as "a time during which the abnormal state of the clear signal continues".

For example, in First Embodiment, in a case where the transmission processing of the clear signal is executed at a high frequency, as an example, the first WDT detection unit 40 may detect whether or not the cycle in which the value of the input signal changes is equal to or less than a specific cycle, and may detect a watchdog in a case where a state equal to or less than the specific cycle continues for 10 seconds.

Similarly, the second WDT detection unit 50 may detect whether or not the cycle in which the value of the input signal changes is equal to or less than a specific cycle, and may detect a watchdog in a case where a state equal to or less than the specific cycle continues for five seconds. With such a configuration, effects similar to those of the above-described example can be achieved. That is, it is possible to recover in the case of a temporary failure and transmit an external alarm in the case of a permanent failure.

It has been described that the arithmetic processing unit 20 in the above example includes a plurality of CPUs (first CPU 200 and second CPU 210), and each CPU itself includes a plurality of cores. However, various modifications are conceivable for the configuration of the arithmetic processing unit to which the present invention can be applied.

For example, the arithmetic processing unit may include only the first CPU 200, and the clear signal may be transmitted from each core. Even in this case, the WDT clear signal generation unit can monitor changes in the values of the plurality of clear signals from the cores and output the first timer clear signal WDT_CLR1 when the number of clear signals whose values have changed reaches a predetermined number.

Alternatively, the arithmetic processing unit may include a plurality of CPUs, and each CPU may include a single core. Even in this case, the WDT clear signal generation unit can monitor changes in the values of the plurality of clear signals from the CPUs and output the first timer clear signal WDT_CLR1 when the number of clear signals whose values have changed reaches a predetermined number.

Furthermore, the arithmetic processing unit may be a single CPU including a single core, the OS may operate thereon, and the clear signals may be transmitted from a plurality of tasks operating on the OS. Even in this case, the WDT clear signal generation unit can monitor changes in the values of the plurality of clear signals from the tasks and output the first timer clear signal WDT_CLR1 when the number of clear signals whose values have changed reaches a predetermined number. Since the WDT detection is performed for each task operating on the OS, the abnormal state of the arithmetic processing unit can be detected more satisfactorily.

As described above, in the embodiment to which the present invention can be applied, the output source of the plurality of clear signals input to the watchdog timer clear signal generation unit includes a plurality of CPUs in a case where the arithmetic processing unit includes a plurality of CPUs, a plurality of cores in the CPU in a case where at least one of the CPUs of the arithmetic processing unit includes a plurality of cores, and at least one of a plurality of tasks to be processed in the arithmetic processing unit.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. An information processing device that detects an abnormality of an arithmetic processing unit, the information processing device comprising:
the arithmetic processing unit;
a watchdog timer clear signal generation unit that receives a plurality of clear signals periodically output from the arithmetic processing unit, monitors whether changes in values of the plurality of clear signals are normal or abnormal, and outputs a first timer clear signal when a number of clear signals whose values are normal reaches a predetermined number; and
a first watchdog timer detection unit that transmits a first watchdog detection signal when the first timer clear signal is input and an abnormal state of the first timer clear signal continues for a first predetermined time,
the arithmetic processing unit including one or more CPUs,
each of the one or more CPUs including one or more cores,
an output source of the plurality of clear signals input to the watchdog timer clear signal generation unit including a plurality of CPUs in a case where the arithmetic processing unit includes the plurality of CPUs, a plurality of cores in the CPU in a case where at least one of the one or more CPUs includes the plurality of cores, and at least one of a plurality of tasks processed in the arithmetic processing unit, and
the watchdog timer clear signal generation unit being provided in hardware in an IC common to the arithmetic processing unit.

2. The information processing device according to claim 1,
wherein the watchdog timer clear signal generation unit is provided in an FPGA circuit in an IC common to the arithmetic processing unit.

3. The information processing device according to claim 1,
wherein at least one of the one or more CPUs is divided into a plurality of virtual machines,
wherein the plurality of virtual machines include a virtual machine to which a single core is allocated, and
wherein the clear signal is output from the virtual machine to which the single core is allocated to the watchdog timer clear signal generation unit.

4. The information processing device according to claim 1,
wherein an OS operates in at least one of the one or more CPUs, and
wherein at least one or more tasks for transmitting the clear signal to be transmitted to the watchdog timer clear signal generation unit are allocated to each of the cores in the CPU allocated to the OS.

5. The information processing device according to claim 1, further comprising a second watchdog timer detection unit to which one or a plurality of clear signals periodically output from the arithmetic processing unit are input, and outputs a second watchdog detection signal when an abnormal state of the one or a plurality of clear signals input continues for a second predetermined time, and
wherein an operation of the information processing device when the first watchdog detection signal is output and an operation of the information processing device when the second watchdog detection signal is output are different.

6. The information processing device according to claim 5,
wherein a set of signals input to the second watchdog timer detection unit is not the same as a set of signals input to the first watchdog timer detection unit.

7. The information processing device according to claim 5,
wherein a restart of the information processing device is executed on the basis of output of the second watchdog detection signal, and a signal indicating abnormality is transmitted to the outside of the information processing device on the basis of output of the first watchdog detection signal, and
wherein the second predetermined time is shorter than the first predetermined time.

8. The information processing device according to claim 5,
wherein the first watchdog timer detection unit is an IC different from an IC in which the arithmetic processing unit is provided, and
wherein the second watchdog timer detection unit is a built-in function of an IC in which the arithmetic processing unit is provided.

9. The information processing device according to claim 7,
wherein detection by the first watchdog timer detection unit is stopped when a restart based on the second watchdog detection signal is performed, and
wherein detection by the first watchdog timer detection unit is resumed during the restart or after completion of the restart.

10. The information processing device according to claim 7, further comprising a restart information recording unit that records information related to a restart of the information processing device according to the second watchdog detection signal, and
wherein a restart of the information processing device based on output of the second watchdog detection signal is invalidated when the information related to the restart recorded in the restart information recording unit satisfies a predetermined condition.

11. The information processing device according to claim 10,
wherein the predetermined condition is that a number of restarts of the information processing device within a predetermined period is a predetermined number of times or more.

12. A protection control device that detects an abnormality of an arithmetic processing unit,
the protection control device comprising the arithmetic processing unit,
the arithmetic processing unit including one or more CPUs,
each of the one or more CPUs including one or more cores,
the protection control device:
dividing software processing for implementing a protection control function into a plurality of pieces;
distributedly executing the plurality of divided software processing by allocating the plurality of divided software processing to any one of a plurality of CPUs in a case where the arithmetic processing unit includes the plurality of CPUs, a plurality of cores in the CPU in a case where at least one of the one or more CPUs includes the plurality of cores, and a plurality of tasks to be processed in the arithmetic processing unit; and
comprising a watchdog timer clear signal generation unit that and receives a plurality of clear signals periodically output from the plurality of software processing, monitors whether changes in values of the plurality of clear signals are normal or abnormal, and outputs a first timer clear signal when a number of the clear signals whose values change normally reaches a predetermined number, and a first watchdog timer detection unit that outputs a first watchdog detection signal when the first timer clear signal is input and an abnormal state of the first timer clear signal continues for a first predetermined time, and
the watchdog timer clear signal generation unit being provided in hardware in an IC common to the arithmetic processing unit.

13. The protection control device according to claim 12,
wherein at least one of the one or more CPUs is divided into a plurality of virtual machines, and
wherein at least one of the plurality of virtual machines executes the software processing without mounting an OS.

14. The protection control device according to claim 12,
wherein the protection control function is implemented by receiving information on an electrical quantity transmitted via a network, performing relay calculation processing, and transmitting a trip command via the network, and
wherein the relay calculation processing and analysis processing of information transmitted and received via the network are distributed and executed by any one of a plurality of CPUs in a case where the arithmetic processing unit includes the plurality of CPUs, a plurality of cores in the CPU in a case where at least one of the one or more CPUs includes the plurality of cores, and the plurality of tasks processed in the arithmetic processing unit.

15. A watchdog timer operation method that detects an abnormality of an arithmetic processing unit included in an information processing device,
the information processing device comprising:
the arithmetic processing unit;
a watchdog timer clear signal generation unit that receives a plurality of clear signals periodically output from the arithmetic processing unit, monitors whether changes in values of the plurality of clear signals are normal or abnormal, and outputs a first timer clear signal when a number of clear signals whose values are normal reaches a predetermined number;
a first watchdog timer detection unit that transmits a first watchdog detection signal when the first timer clear signal is input and an abnormal state of the first timer clear signal continues for a first predetermined time;
a second watchdog timer detection unit to which one or a plurality of clear signals periodically output from the arithmetic processing unit are input, and outputs a second watchdog detection signal when an abnormal state of the one or a plurality of clear signals input continues for a second predetermined time that is shorter than the first predetermined time; and
a restart information recording unit that records information related to a restart of the information processing device according to the second watchdog detection signal,
the arithmetic processing unit including one or more CPUs,
each of the one or more CPUs including one or more cores,
an output source of the plurality of clear signals input to the watchdog timer clear signal generation unit including a plurality of CPUs in a case where the arithmetic processing unit includes the plurality of CPUs, a plurality of cores in the CPU in a case where at least one of the one or more CPUs includes the plurality of cores, and at least one of a plurality of tasks processed in the arithmetic processing unit,
the watchdog timer clear signal generation unit being provided in hardware in an IC common to the arithmetic processing unit, and
the watchdog timer operation method comprising:
obtaining information related to the restart recorded in the restart information recording unit;
determining whether the obtained information related to the restart satisfies a predetermined condition; and
invalidating a restart of the information processing device based on output of the second watchdog detection signal when the information related to the restart recorded in the restart information recording unit satisfies the predetermined condition.
